# EUROPÄISCHE PATENTSCHRIFT

(11) **EP 0 677 266 B1**
(45) Veröffentlichungstag und Bekanntmachung des Hinweises auf die Patenterteilung: **09.07.1997**
(21) Anmeldenummer: 95105530.0
(22) Anmeldetag: 12.04.1995
(51) Int. Cl.: A47J 37/04

(54) **Ofensystem**
Oven system
Système de four

(30) Priorität: 15.04.1994 DE 4413050
(43) Veröffentlichungstag der Anmeldung: 18.10.1995
(73) Patentinhaber: Premark FEG L.L.C., Wilmington, Delaware 19801 (US)
(72) Erfinder: Schmid, Karl, CH-8103 Unterengstringen (CH); Albrecht, Jürg, CH-5222 Tägerig (CH)
(74) Vertreter: Füchsle, Klaus, Dipl.-Ing.

(56) Entgegenhaltungen:
- DE-A- 1 454 152
- DE-A- 2 309 483
- DE-A- 2 358 119
- DE-C- 4 116 544
- DE-U- 7 047 203
- FR-A- 2 206 925
- FR-A- 2 682 009
- US-A- 3 232 247
- US-A- 3 706 272
- US-A- 4 873 920

## Beschreibung

Die Erfindung betrifft ein Ofensystem zum Garen, Kochen, Backen und Regenieren einerseits und zum Grillen andererseits von Lebensmitteln durch Einbringen von Wärme in einen Garraum des Ofens.

Zum Garen bzw. Grillen von Grillgut, wie Brathähnchen, Rollbraten, ganze Spanferkel oder dergleichen, sind verschiedenste Ofensysteme bekannt. Um ein optimales Grillergebnis zu erzielen, ist es notwendig, das Grillgut von allen Seiten zu braten bzw. zu grillen. Hierzu sind in den bekannten Ofensystemen drehbare Spieße einzeln in den dafür im Innenraum des Ofens vorgesehenen, fest angebrachten Drehvorrichtungen einhängbar, so daß nur jeweils ein Spieß aus dem Ofen entnehmbar und neu bestückt werden kann.

Bei den bekannten Ofensystemen ist es nicht möglich, alle Spieße auf einmal zu entnehmen, um den gesamten Garraum mit neuem Grillgut zu bestücken. Das bedingt zum einen einen unvermeidbaren Energieverlust beim Einbringen neuen Grillguts, da die einzelnen Spieße bei offener Ofentür gewechselt werden müssen, und zum anderen einen unerwünschten Zeitverlust. Denn während des aufwendigen Austauschvorgangs von bereits fertiggegartem und noch zu grillendem Grillgut, kann der bereits aufgeheizte Ofen nicht benutzt werden. Dies ist in der Großgastronomie ein sehr großer Nachteil.

Aus der DE-GM 70 47 203 ist ein Backofen mit Grillanordnung bekannt, bei dem ein aus dem Ofengehäuse herausziehbares Geschirrteil zusammen mit einer Aufsatzhalterung einen Einschubrahmen bildet. Ein Grillspieß ist drehbar in die Aufsatzhalterung einlegbar. An dem Grillspieß ist eine Scheibe fest angebracht, die mit einem Mitnehmer ein- und auskuppelbar ist, wodurch sich der Grillspieß drehen läßt. Der zum Drehen des Mitnehmers dienende Elektromotor ist auf der Außenseite des Garraums angebracht. Bei diesem Ofensystem kann lediglich ein Grillspieß angetrieben werden.

In der DE-OS 23 58 119 ist ein Ofensystem zum Grillen von Speisen offenbart, bei dem zwei im Garraum angeordnete, sich gegenüberliegende Drehscheiben durch Abstandstangen voneinander beabstandet sind und daran Drehkörper drehbar aufgehängt sind. Eine Drehscheibe wird durch einen Antrieb über Ritzel angetrieben. Diese durch die Drehscheiben gebildete Drehvorrichtung ist nicht aus dem Ofen entnehmbar, da ein durch eine der Drehscheiben ragendes Heizelement koaxial um die Drehachse der Drehscheiben angeordnet und fest an einer Seitenwand des Ofens befestigt ist.

Schließlich ist aus der FR-A-2682009 ein Ofensystem gemäß dem Oberbegriff des Anspruchs 1 bekannt, bei dem eine auf horizontal ein- und ausfahrbaren Schienen drehbar gelagerte Drehtrommel zum Aufnehmen von Lebensmitteln in bzw. aus dem Garraum herein- bzw. herausführbar ist. Die Trommel umfaßt auf den Stirnseiten Scheiben und ist auf an den ein- und ausfahrbaren Schienen fest angebrachten Trägern entnehmbar gelagert. Beim Entnehmen der bekannten Trommel aus dem Ofeninneren verbleiben die Schienen im Ofen, so daß ein vollständiges Freiräumen des Garraums und Einbringen eines anderen Aufnahmesystems für die Lebensmittel nicht möglich ist.

Das der Erfindung zugrundeliegende technische Problem besteht darin, ein Ofensystem zu schaffen, bei dem ein Austausch des gesamten Garrauminhalts auf einfache Weise schnell erfolgen kann und zudem Vorteile des allseitigen Garens bzw. Grillens genutzt werden können.

Dieses technische Problem wird durch ein Ofensystem mit den Merkmalen des Anspruchs 1 gelöst.

Der Erfindung liegt der Gedanke zugrunde, an sich bekannte sogenannte Hordengestelle und zugehörige Öfen derart weiter zu entwickeln, daß sie auch zum Grillen von Grillgut verwendbar sind, dabei aber die Vorteile der Hordengestelle bestehen bleiben; d.h. daß zum einen durch Austausch der Einschubrahmen ein sehr schneller Wechsel von gegarten und ungegarten Lebensmitteln ermöglicht wird, und zum anderen nun ein weiterentwickelter Ofen erfindungsgemäß auch zum Grillen benutzt werden kann. Dabei ist bei einem erfindungsgemäßen Ofensystem weiterhin die Benutzung der bekannten Hordengestelle möglich.

Die bekannten Hordengestelle sind derart aufgebaut, daß ein Einschubrahmen im wesentlichen den Garraum ausfüllt und im Einschubrahmen übereinander Bleche mit daraufgelegtem Bratgut anordbar sind. Mit einem dafür vorgesehenen Wagen wird vor den Ofen gefahren und mittels einer Hebevorrichtung der gesamte Einschubrahmen aus dem Ofen herausgezogen bzw. hineingeschoben. Dadurch ist ein sehr schneller Wechsel mit neu bestückten Blechen möglich.

Jedoch ist es bei den bekannten Hordengestellen - wie bereits ausgeführt - nicht möglich, das Grillgut zu drehen, was zu einem nicht optimalen Grillergebnis führt. Erst durch das Vorsehen eines Antriebs am Ofen und der Weiterentwicklung des Hordengestells mit vorteilhafterweise einer mit dem im Garraum angetriebenen Antriebsrad eingreifenden Zahnscheibe am Einschubrahmen, mit der die Aufnahmemittel für die Lebensmittel gedreht werden, ist ein sehr schneller Austausch verschiedener Gestelle bzw. Einschübe mit den Vorteilen des Hordengestells für Grillgut ermöglicht.

Damit der Antrieb im Ofen vor Verschmutzung durch Fett und dergleichen sowie der hohen Temperaturen im Garraum geschützt ist, ist es vorteilhaft, daß ein Elektromotor außerhalb des Garraums ein auf der Außenwandung des Garraums drehbar gelagertes Antriebsritzel antreibt und dieses Ritzel mit einem auf der Innenseite der entsprechenden Seitenwand des Garraums angebrachten Antriebsrad verbunden ist. Dadurch wird auf konstruktiv einfache Weise das Ein- und Auskuppeln des Antriebs des Einschubrahmens mit den darin drehbar gelagerten Aufnahmevorrichtungen gewährleistet.

Denn indem eine an dem Einschubrahmen drehbar gelagerte Zahnscheibe in eingeschobenem Zustand des Einschubrahmens mit dem auf der Innenseite des Ofens angeordneten Antriebsrad eingreift, wird ohne weiteres Zutun des Bedieners durch das einfache Einführen des Einschubrahmens der Antrieb im Ofen mit dem Einschubrahmen gekoppelt bzw. verbunden, so daß die beispielsweise schwenkbar gelagerten Aufnahmemittel mit dem Grillgut durch den Antrieb gedreht werden können.

Eine sehr einfache Ausbildung der Aufnahmemittel für das drehbar gelagerte Grillgut wird vorteilhafterweise dadurch erreicht, daß an den zumindest jeweils zwei miteinander verbundenen Drehscheiben, von denen wenigstens eine Drehscheibe fest mit der Zahnscheibe verbunden ist, Spieße oder Einhängekörbe oder dergleichen auf konstruktiv einfache Art und Weise an den Drehscheiben einhängbar sind. Es können auch mehrere Drehscheiben durch z.B. weitere Ketten und dergleichen über den einen Antrieb im Ofen drehbar antreibbar vorgesehen sein.

Indem zumindest ein Aufnahmestift jeweils auf den Drehscheiben vorgesehen ist, kann ein Einhängekorb schwenkbar eingehängt werden, so daß das Grillgut in einem derartigen Einhängekorb hineingelegt werden kann und durch einfaches Einhängen der Körbe in die Aufnahmestifte der Einschubrahmen bereits außerhalb des Ofens bestückbar ist.

Ein derartiger Einhängekorb für das Grillen des Grillguts durch Drehen weist vorteilhafterweise zwei voneinander beabstandete, durch Stangen miteinander verbundene Seitenwände auf, welche Seitenwände Einhängegabeln haben, die in den Aufnahmestiften an den Drehscheiben des Einschubrahmens eingreifbar bzw. einhängbar sind. Durch die Ausbildung mit den Stäben kann das Grillgut in optimaler Weise von allen Seiten gegrillt werden. Zudem ist es auch möglich Gemüse oder andere Lebensmittel in den Einhängekörben von allen Seiten zu garen.

Damit beim Einschieben des Einschubrahmens in den Garraum das Antriebsrad durch eventuelles schräges Einschieben des Einschubrahmens nicht beschädigt wird, ist es vorteilhaft, daß ein Schutzblech unter und/oder über dem Antriebsrad auf der Innenseite des Ofens angebracht ist.

Das Ein- bzw. Herausführen des erfindungsgemäßen Einschubrahmens wird durch im Boden des Garraums vorteilhafterweise vorgesehene Führungen erleichtert. Diese Führungen verlaufen parallel zu der Einschubrichtung und können z.B. aus im Boden eingeformten Sicken bestehen, in die vorteilhafterweise vorgesehene Rollen am Einschubrahmen laufen.

Indem ein Ofen verwendet wird, der nicht nur durch Heizspiralen und/oder Ober- und Unterwärme und/oder Heißluftzufuhr beheizt wird, sondern auch durch in den Garraum des Ofens zugeführten Dampf, ist ein optimales Grillergebnis zu erzielen. Denn durch die Zufuhr von einem Dampf- und/oder Heißluftgemisch ist eine optimale Feuchtigkeitseingabe ermöglicht, so daß das Grillresultat stark verbessert wird. Denn gegenüber einem bekannten Grill wird erreicht, daß ca. 40% weniger Gewichtsverlust auftritt. Zudem ist gegenüber einem Grill, wie er z.B. in einer Hähnchenbraterei verwendet wird, eine ca. 50%-ige Energieersparnis erzielbar, da beim erfindungsgemäßen Ofensystem eine Isolierung auf der gesamten Ofenwandung und auch der Ofentür möglich ist.

Zudem ist ein Vorgaren mit Niedertemperatur durch das erfindungsgemäße Ofensystem bei Dampfzufuhr ermöglicht.

Außerdem wird durch die Dampffunktion des erfindungsgemäßen Ofensystems die Reinigung auch bei der Verwendung als Grill wesentlich erleichtert, da sich das abgesetzte Fett bei Heißdampfzufuhr leichter löst.

Indem nur ein Spieß in Aufnahmegabeln der Drehscheiben des erfindungsgemäßen Einschubrahmens eingehängt wird, können auch große Fleischstücke oder auch ganze Spanferkel bei dem an sich bekannten Heißluftdämpfer gegrillt werden.

Vorteilhafterweise ist der Elektromotor mit einem Getriebe versehen, so daß die Umdrehungszahl der Drehscheiben des erfindungsgemäßen Einschubrahmens im Garraum bei eingeschobenen Zustand in gewünschter Weise einstellbar ist.

Außerdem ist es vorteilhaft, daß eine Rutschkupplung zwischen dem Antriebsrad am Ofen und Elektromotor vorgesehen ist, so daß bei einer möglichen Blockierung der Drehung der Antrieb nicht beschädigt wird.

Da die entsprechenden Hygienevorschriften sehr streng sind, ist es vorteilhaft, die einzelnen Bauteile des Einschubrahmens und/oder der Einhängekörbe aus Chrom-Nickelstahl ,Edelstahl oder anderen für den Ofeneinsatz geeigneten Materialien herzustellen. Aus dem gleichen Grund ist es vorteilhaft, daß die Lager der drehbaren Elemente dicht und/oder selbstschmierend ausgebildet sind bzw. ohne Schmierung laufen.

Im folgenden ist zur weiteren Erläuterung und zum besseren Verständnis der Erfindung ein Ausführungsbeispiel unter Bezugnahme auf die beigefügten Zeichnungen näher beschrieben und erläutert. Es zeigt:
- Fig. 1: eine perspektivische Darstellung eines erfindungsgemäßen Einschubrahmens mit darin eingehängten Einhängekörben;
- Fig. 2: den Innenraum bzw. Garraum eines Ofens mit seitlich angeordnetem Antriebsrad;
- Fig. 3: eine detaillierte Darstellung des Antriebsrades im Garraum;
- Fig. 4: eine perspektivische Darstellung eines Einhängekorbs;
- Fig. 5: eine perspektivische Darstellung von außen auf die Rück- und Seitenfläche des Ofens mit zusätzlich angebrachten Elektromotor und Zahntrieb;
- Fig. 6: eine Draufsicht auf die Zahnscheibe am Einschubrahmen und das darin eingreifende Antriebsrad am Ofen, und
- Fig. 7: eine Vorderansicht auf den erfindungsgemäßen Einschubrahmen nach Fig. 1.

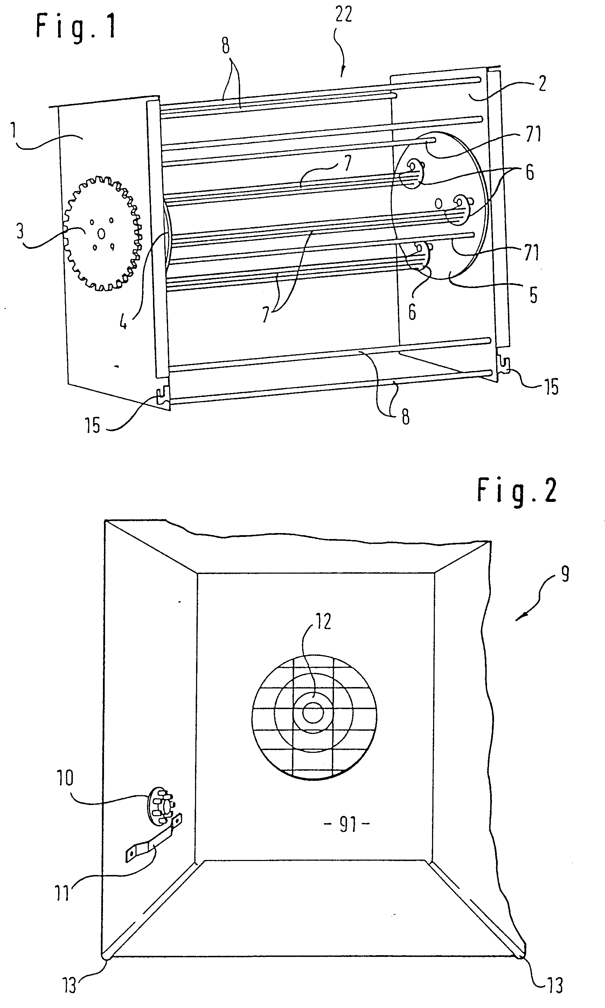

Wie aus der Fig. 1 hervorgeht, besteht ein Einschubrahmen 22 aus zwei voneinander beabstandeten Seitenwänden 1, 2, die durch horizontal verlaufende Abstandshaltestangen 8 miteinander verbunden sind. Es ist jedoch auch die Verbindung durch untere und obere Bleche möglich. Auf der Innenseite der Seitenwände 1, 2 ist jeweils eine Drehscheibe 4, 5 drehbar gelagert, wobei eine der Drehscheiben 4, 5, hier die linke Drehscheibe 4, auf der Außenseite der entsprechenden Seitenwand 1 starr über eine Welle mit einer Zahnscheibe 3 verbunden ist. Die beiden Drehscheiben 4, 5 sind durch Verbindungsstangen 71 fest miteinander verbunden, so daß bei Drehung der Zahnscheibe 3 beide Drehscheiben 4 und 5 drehen. An beiden sich gegenüberliegenden Seiten der Drehscheiben 4, 5 sind jeweils drei einander gegenüberliegende Aufnahmestifte 51 befestigt, in die Einhängekörbe 6 eingehängt sind. Die Einhängekörbe 6 werden noch im folgenden detaillierter beschrieben. Am unteren vorderen Seitenrand der Seitenwände 1, 2 sind jeweils Einhakvorrichtungen 15 vorgesehen, in die ein an sich bekannter Wagen (nicht gezeigt) mit einer Hebevorrichtung einhängbar ist, so daß der gesamte Einschubrahmen 22 in und aus dem Ofen herein- bzw. herausführbar ist.

In der Fig. 2 ist der Garraum 91 des Ofens 9 detaillierter dargestellt. Auf der Rückwand des Garraums 91 ist ein Heißlüfter 12 angeordnet, durch den Heißluft in den Garraum 91 eingeführt wird. Auf der linken Seitenwand des Garraums 91 ist ein Antriebsrad 10 angeordnet, das durch ein darunter angebrachtes Schutzblech 11, das von der Seitenwand des Garraums 91 vorsteht, vor Beschädigung geschützt wird. In dem Bodenblech des Garraums 91 sind in den Seitenbereichen Führungssicken 13 eingeformt, so daß der Einschubrahmen 22 beim Ein- bzw. Herausziehen geführt wird.

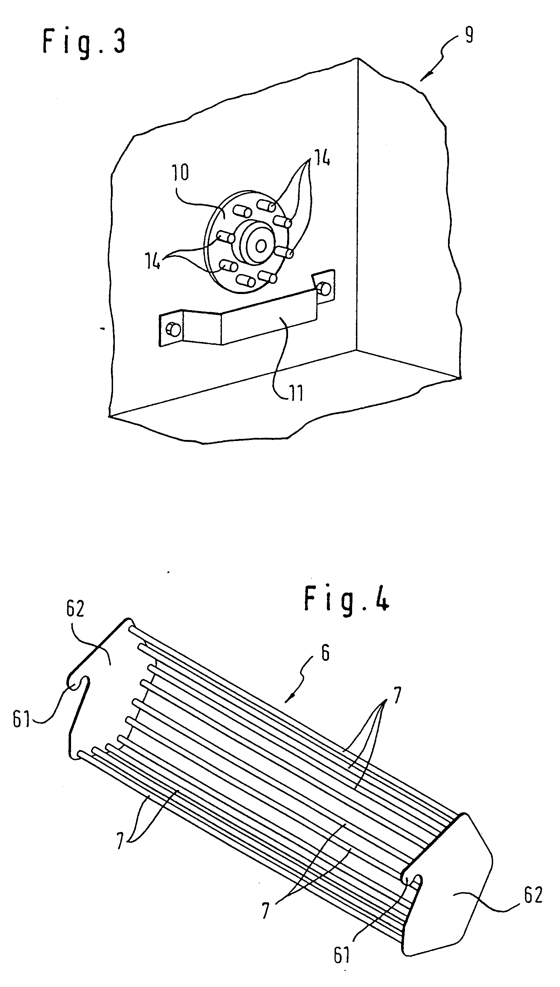

Bei der in Fig. 3 gezeigten detaillierteren Darstellung des Antriebsrads 10 ist zu erkennen, daß an dem Antriebsrad eine Anzahl Stifte 14 kreisförmig angeordnet sind, die in die entsprechende Zahnung der Zahnscheibe 3 des Einschubrahmens 22 bei eingeschobenem Einschubrahmen 22 eingreifen. Das Schutzblech 11 besteht aus einem mehrfach abgekanteten Blechstreifen, der von der Seitenwand des Garraums 91 weiter vorsteht als die größte Erhebung der Antriebsscheibe 10. Dieses Blech kann durch Schrauben oder Nieten oder auch Punktschweißen an dem Seitenblech des Garraums befestigt sein.

In der Fig. 4 ist eine detailliertere Darstellung eines Einhängekorbs 6 gezeigt, der aus zwei voneinander beabstandeten Korbwänden 62 besteht, die durch Korbstangen 7 fest miteinander verbunden sind. Die Korbstangen 7 bilden dabei einen im Querschnitt wannenartigen Aufnahmekörper, in den das Grillgut eingelegt wird. Beide Korbwände 62 sind mit einem Einschnitt versehen, so daß eine Einhängegabel 61 gebildet wird, in die die entsprechenden Aufnahmestifte 51 an den Drehscheiben 4, 5 eingreifen. Dadurch wird ein Einhängekorb 6 zwischen den beiden Drehscheiben 4, 5 schwenkbar gelagert.

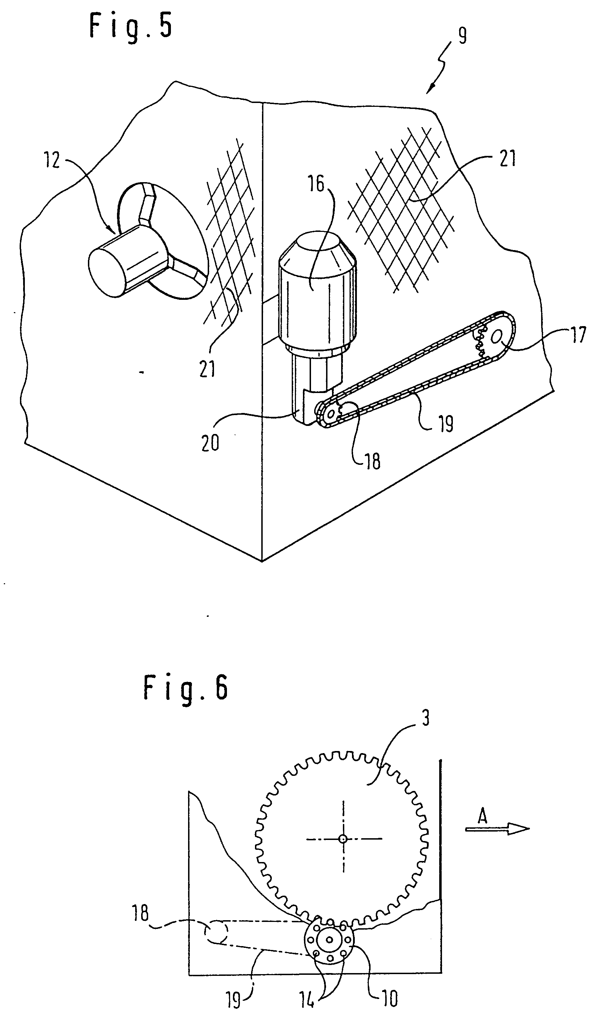

Die Fig. 5 zeigt die Außenansicht des Ofens 9 bei entfernter Außenwandung. Auf der Rückseite des Ofens ist die Hinteransicht des Heizlüfters 12 zu sehen. Auf der einen Seitenwand des Ofens 9 ist der Antrieb 16, hier ein Elektromotor, befestigt, der über ein Getriebe 20 ein Ritzel 18 antreibt. Über eine Kette 19 wird ein Abtriebszahnritzel 17 angetrieben, das mit dem auf der Innenseite des Ofens angebrachten Antriebsrad 10 über eine Welle starr verbunden ist. Bei der in Fig. 5 gezeigten perspektivischen Ansicht ist noch die Isolierung 21 angedeutet, welche die gesamte Wandung des Garraums 91 außen umgibt.

Die Fig. 6 stellt eine schematische Darstellung des eingeschobenen Einschubrahmens 22 im Garraum 91 dar. Hierbei ist die Seitenwand des Garraums 91 teilweise ausgebrochen. Die Zahnscheibe 3 des Einschubrahmens 22 greift in eingeschobenem Zustand in die Stifte 51 des Antriebsrads 10 ein. Angedeutet sind zudem nochmals die Kette 19 und das Ritzel 18, das durch den Elektromotor 16 angetrieben wird. Wird der Einschubrahmen 22 in Richtung des Pfeils A herausgezogen, so löst sich die Zahnscheibe 3 problemlos von dem Antriebsrad 10 auf der Innenseite des Garraums 91. Entsprechenderweise kommt beim Einschieben des Einschubrahmens 22 in den Garraum 91 die Zahnscheibe 3 in der Endstellung des Einschubrahmens 22 mit dem Antriebsrad 10 bzw. dessen daran befestigten Stiften 14 in Eingriff.

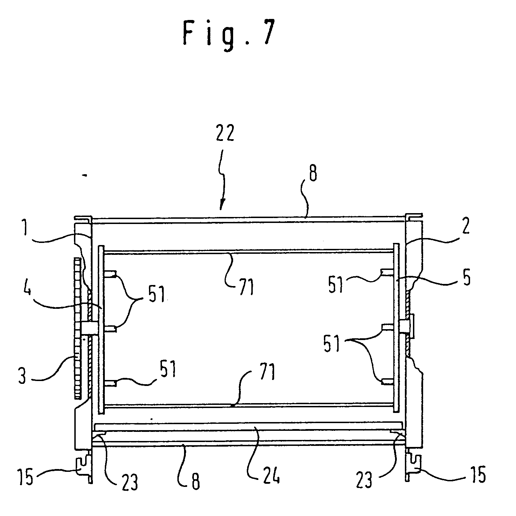

Wird nun der Elektromotor betätigt, so wird über das Antriebsritzel 18 und die Kette 19 das auf der Außenseite des Garraums angebrachte Antriebsritzel 17 gedreht und gleichzeitig das damit starr verbundene Antriebsrad 10 auf der Innenseite des Garraums 91. Dementsprechend wird in eingeschobenem Zustand des Einschubrahmens 22 die Zahnscheibe 3 gedreht, wodurch die Drehscheiben 4, 5 mitdrehen. Da die Einhängekörbe 6 im eingehängten Zustand freischwingend zwischen den Drehscheiben 4, 5 an den Aufnahmestiften 51 aufgehängt sind, wird in optimaler Weise das Grillgut von allen Seiten gegrillt. Das abtropfende Fett wird in einer Auffangschale 22, wie in der Fig. 7 gezeigt, aufgefangen. Die Auffangschale 22 liegt dabei auf Trägern 23, die an den Seitenwänden 1, 2 angebracht sind, auf.

Ist das gesamte Grillgut fertiggegrillt, so wird die nicht dargestellte Tür am Ofen 9 geöffnet und ein an sich bekannter Wagen vorgefahren, der eine Eingriffvorrichtung aufweist, die in die Einhakvorrichtungen 15 am Einschubrahmen 22 eingreift und es ermöglicht, daß der gesamte Einschubrahmen 22 aus dem Garraum 91 des Ofens 9 herausgezogen werden kann. Indem ein zweiter Einschubrahmen 22 bereits während der Grillzeit vorbereitet wurde, kann nun durch einfachen Austausch der Einschubrahmen die Wärme des Ofens bereits für das nächste Grillgut genutzt werden. Hierzu wird der mit noch nicht gegrilltem Grillgut bestückte Einschubrahmen 22 in den Garraum 91 eingeführt, wobei die Seitenwände 1, 2 auf den Führungen 13 aufliegen. Dadurch, daß vorteilhafterweise eine Dampfzufuhr im Garraum 91 vorgesehen ist, wird das Grillergebnis stark verbessert. Die Dampfzufuhr geschieht auf bekannte Art und Weise und ist bereits in verschiedenen Öfen verwirklicht.

Dadurch, daß eine Impulssteuerung für den Elektromotor vorgesehen ist, kann auf einfache Art und Weise das Beschicken und Entladen der Körbe 6 auch in eingefahrenem Zustand des Einschubrahmens 22 im Garraum 91 geschehen, indem die Körbe jeweils entsprechend auf der zum Bediener weisenden Seite positioniert werden.

## Patentansprüche

1. Ofensystem zum Garen, Kochen, Backen und Regenerieren einerseits und zum Grillen andererseits von Lebensmitteln durch Einbringen von Wärme in einen Garraum (91) des Ofens (9), mit
- mindestens einem in bzw. aus dem Garraum (91) herein- bzw. herausführbaren Einschubrahmen (22), der zumindest jeweils zwei miteinander verbundene Drehscheiben (4, 5) aufweist, die jeweils auf sich gegenüberliegenden Innenseiten des Einschubrahmens (22) drehbar gelagert sind, mindestens einem am Ofen angebrachten Antrieb (16) zum Drehen einer Drehscheibe (4), dadurch gekennzeichnet, daß
- Aufnahmemittel (6) für die Lebensmittel an den Drehscheiben (4, 5) entnehmbar befestigt sind, daß
- der Antrieb (16) mit der Drehscheibe (4) ein- bzw. auskuppelbar ist, und daß
- der Einschubrahmen (22) zum Austauschen entnehmbar ist.

2. Ofensystem nach Anspruch 1, bei dem der Antrieb (16) aus einem außerhalb des Garraums (91) angebrachtem Elektromotor (16) besteht, der ein auf der Außenwandung des Garraums (91) drehbar gelagertes Antriebsritzel (17) antreibt und dieses Ritzel (17) mit einem auf der Innenseite der entsprechenden Seitenwand (1) des Garraums (9) angebrachten Antriebsrad (10) verbunden ist.

3. Ofensystem nach einem der Ansprüche 1 oder 2, bei dem ein an dem Einschubrahmen (22) drehbar gelagerte Zahnscheibe (3) in eingeschobenem Zustand des Einschubrahmens (22) mit dem auf der Innenseite des Ofens (9) angeordneten Antriebsrad (10) eingreift.

4. Ofensystem nach Anspruch 1, dadurch gekennzeichnet, daß die Aufnahmemittel jeweils einen Einhängekorb (6) umfassen, der vorteilhafterweise aus zwei voneinander beabstandeten Seitenwänden (62) besteht, die durch Stangen (71) miteinander verbunden sind und die Seitenwände (62) Einhängegabeln (61) aufweisen, welche in Aufnahmestiften (51) an den Drehscheiben (4, 5) des Einschubrahmens (22) einhängbar sind.

5. Ofensystem nach einem oder mehreren der vorhergehenden Ansprüche, dadurch gekennzeichnet, daß ein Schutzblech (11) unter und/oder über dem Antriebsrad (10) auf der Innenseite des Ofens (9) angebracht ist.

6. Ofensystem nach einem oder mehreren der vorhergehenden Ansprüche, dadurch gekennzeichnet, daß am Boden des Garraumes (91) eine oder mehrere Führungen (13) vorgesehen sind, die zur Aufnahme des Einschubrahmens (22) dienen.

7. Ofensystem nach einem oder mehreren der vorhergehenden Ansprüche, bei dem der Garraum (91) durch Heizspiralen und/oder Ober- und Unterwärme und/oder Heißluftzufuhr beheizt wird, dadurch gekennzeichnet ,daß zusätzlich Dampf in den Garraum (91) zuführbar ist.

## Claims

1. Oven system for cooking, boiling, baking and regenerating on the one hand and for grilling on the other hand of foods by introducing heat into a cooking chamber (91) of the oven (9), with
- at least one rack (22) which can be guided in and out of the cooking chamber (91) and which comprises at least in each case two rotary discs (4, 5) connected to each other, which are mounted rotatably in each case on opposite insides of the rack (22),
- at least one drive (16) mounted on the oven for rotation of a rotary disc (4),
characterised
- in that holding means (6) for the foods are attached removably to the rotary discs (4, 5),
- in that the drive (16) can be coupled to or uncoupled from the rotary disc (4), and
- in that the rack (22) is removable for exchange.

2. Oven system according to claim 1, in which the drive (16) consists of an electric motor (16) which is mounted outside the cooking chamber (91) and which drives a drive pinion (17) mounted rotatably on the outer wall of the cooking chamber (91), and this pinion (17) is connected to a drive gear (10) mounted on the inside of the corresponding side wall (1) of the cooking chamber (91).

3. Oven system according to either of claims 1 or 2, in which a toothed disc (3) mounted rotatably on the rack (22) when the rack (22) is inserted engages with the drive gear (10) arranged on the inside of the oven (9).

4. Oven system according to claim 1, characterised in that the holding means include in each case a suspension basket (6) which advantageously consists of two spaced-apart side walls (62) connected to each other by rods (71) and the side walls (62) have suspension forks (61) which can be suspended in holding pins (51) on the rotary discs (4, 5) of the rack (22).

5. Oven system according to one or more of the preceding claims, characterised in that a protective plate (11) is mounted under and/or over the drive gear (10) on the inside of the oven (9).

6. Oven system according to one or more of the preceding claims, characterised in that on the floor of the cooking chamber (91) are provided one or more guides (13) which serve to receive the rack (22).

7. Oven system according to one or more of the preceding claims, in which the cooking chamber (91) is heated by heating coils and/or top and bottom heat and/or supply of hot air, characterised in that in addition steam can be supplied to the cooking chamber (91).

## Revendications

1. Système de four destiné à rôtir, cuire, dorer et régénérer d'une part, et à griller d'autre part, des produits alimentaires, par introduction de chaleur dans une enceinte de cuisson (91) du four (9), comprenant
- au moins un châssis à insérer (22) pouvant être introduit dans l'enceinte de cuisson (91) ou en être retiré, chaque châssis à insérer comportant au moins deux disques rotatifs (4, 5) qui sont montés en rotation chacun sur des côtés intérieurs opposés du châssis à insérer (22),
- au moins un dispositif d'entraînement (16) placé sur le four et destiné à faire tourner un disque rotatif (4),
caractérisé
- en ce que des moyens de réception (6) pour les produits alimentaires sont fixés de manière amovible aux disques rotatifs (4, 5),
- en ce que le dispositif d'entraînement (16) peut être accouplé au disque rotatif (4) ou être désaccouplé de celui-ci, et
- en ce que le châssis à insérer (22) peut être extrait pour être remplacé.

2. Système de four selon la revendication 1, dans lequel le dispositif d'entraînement (16) est constitué par un moteur électrique (16) placé à l'extérieur de l'enceinte de cuisson (91) et entraînant un pignon d'entraînement (17) monté en rotation sur la paroi extérieure de l'enceinte de cuisson, ce pignon (17) étant relié à une roue d'entraînement (10) placée sur le côté intérieur de la paroi latérale correspondante (1) de l'enceinte de cuisson (91).

3. Système de four selon l'une des revendications 1 ou 2, dans lequel un disque denté (3) monté en rotation sur le châssis à insérer (22), est en prise, dans l'état inséré du châssis à insérer (22), avec la roue d'entraînement (10) disposée sur le côté intérieur du four (9).

4. Système de four selon la revendication 1, caractérisé en ce que les moyens de réception comprennent chacun une corbeille à accrocher (6), qui est avantageusement constituée de deux parois latérales (62) espacées, qui sont reliées l'une à l'autre par des tiges (71), et ces parois latérales (62) comportent des fourches d'accrochage (61) susceptibles d'être accrochées dans des chevilles de réception (51) sur les disques rotatifs (4, 5) du châssis à insérer (22).

5. Système de four selon l'une ou plusieurs des revendications précédentes, caractérisé en ce qu'une tôle de protection (11) est placée sous et/ou au-dessus de la roue d'entraînement (10) sur le côté intérieur du four (9).

6. Système de four selon l'une ou plusieurs des revendications précédentes, caractérisé en ce que sur le fond de l'enceinte de cuisson (91) sont prévus un ou plusieurs guidages (13) servant à recevoir le châssis à insérer (22).

7. Système de four selon l'une ou plusieurs des revendications précédentes, dans lequel l'enceinte de cuisson (91) est chauffée par des serpentins de chauffage et/ou de la chaleur par le haut et le bas et/ou par amenée d'air chaud, caractérisé en ce qu'il est possible d'amener en supplément de la vapeur dans l'enceinte de cuisson (91).
